# EUROPÄISCHE PATENTSCHRIFT

(11) **EP 0 237 717 B1**
(45) Veröffentlichungstag und Bekanntmachung des Hinweises auf die Patenterteilung: **05.01.1994**
(21) Anmeldenummer: 87100659.9
(22) Anmeldetag: 20.01.1987
(51) Int. Cl.: H02P 5/418

(54) **Drehzahlsteuerung eines Elektromotors**
Speed control of an electrical motor
Commande de vitesse pour un moteur électrique

(30) Priorität: 21.03.1986 DE 3609566
(43) Veröffentlichungstag der Anmeldung: 23.09.1987
(73) Patentinhaber: G.M. Pfaff Aktiengesellschaft, 67655 Kaiserslautern (DE)
(72) Erfinder: Hartwig, Jürgen, D-7530 Pforzheim (DE)
(74) Vertreter: Klein, Friedrich

(56) Entgegenhaltungen:
- GB-A- 2 123 173
- US-A- 3 604 996
- US-A- 4 117 384
- US-A- 4 323 832

## Beschreibung

Die Erfindung betrifft eine Schaltungsanordnung zum Regeln der Drehzahl eines Elektromotors nach dem Oberbegriff des Patentanspruches 1.

Aus der DE-OS 28 33 981, die bei der Bildung des Oberbegriffes des Anspruches 1 berücksichtigt wurde, ist eine Motorsteuerung bekannt, die einen Mikrocomputer enthält. In der Steuereinrichtung ist ein digitaler Regelkreis enthalten, der die vorgegebene Drehzahl aufrecht erhält. Dazu ist ein Zähler vorgesehen, der die Anzahl der Taktsignale eines Oszillators während der Zeit zwischen zwei Impulsen eines mit der Motorwelle verbundenen Tachogenerators auszählt. Diese Zahl dient dann als Grundlage der Ist-Drehzahl zur Errechnung des Drehzahlfehlers gegenüber der Soll-Drehzahl. Mit Hilfe des Drehzahlfehlers wird die Motordrehzahl korrigiert.

Bei der bekannten Steuerung erfolgt damit eine Kontrolle der Ist-Drehzahl und eine Nachregulierung dieser Ist-Drehzahl auf einen vorgegebenen und in einem Mikroprogrammspeicher gespeicherten Sollwert. Eine Drehzahlveränderung auf beliebig einstellbare Soll-Drehzahlen ist nicht vorgesehen.

Durch die US-A-4 117 384 ist eine Motorsteuerung bekannt geworden, bei der mittels eines veränderbaren Widerstandes die Drehzahl des Motors steuerbar ist. Diese Steuerung enthält einen Tachogenerator, der ein Wechselstromsignal liefert, dessen Fequenz der Motordrehzahl proportional ist. Sowohl die Frequenz des Wechselstromsignals als auch der eingestellte Wert des Widerstandes verändern den Zundzeitpunkt eines den Motor steuernden Triacs, wodurch sich die Drehzahl des Motors ändert.

Die bekannte Anordnung enthält zwar ebenfalls ein aus einem Kondensator und einem veränderbaren Widerstand bestehendes RC-Glied sowie als Schaltelemente dienende Komparatoren. Diese Mittel dienen aber in der bekannten Lösung zum Vergleich von Spannungen und sind daher in der bekannten Kombination nicht zur Beeinflussung von digitalen Schaltelementen und daher auch nicht zur digitalen Steuerung eines Motors geeignet. Da die Ermittlung des veränderlichen Widerstandswertes durch die Frequenz des Tachogenerators gesteuert wird, ist für das Anlaufen ein Startschaltkreis erforderlich.

Der Erfindung nach Anspruch 1 liegt daher die Aufgabe zugrunde, eine Schaltungsanordnung der gattungsgemäßen Art so auszugestalten, daß der digitalen Regelung in allen Motorlaufphasen in einfacher Weise unterschiedliche Solldrehzahlen vorgegeben werden können, speziell für in Phasenanschnittsteuerung betriebene Motoren.

Durch die Messung der Taktsignale eines Oszillators während der Ladedauer eines Kondensators in einem RC-Glied auf einen vorbestimmten Wert ergibt sich eine einfach bestimmbare und digital verwertbare Parametergröße für einen die Drehzahl bestimmenden veränderbaren Widerstand, wobei durch Verwendung der bereits am Ausgang der Gleichrichteranordnung zur Verfügung stehenden, im Halbwellen-Rhythmus pulsierenden Gleichspannung ein gesonderter Oszillator entfallen kann.

Die Maßnahme nach Anspruch 2 dient zur Verzögerung der Anschaltung des Kondensators im RC-Glied und der Einschaltung des Zählers für die Ladedauer des Kondensators. Es werden damit sonst erforderliche Bauteile erspart.

Die Schaltungsmaßnahme nach Anspruch 3 dient zur einwandfreien Erkennung der Richtung der Schaltflanke des an dem Mikrocomputer angeschlossenen Komparators und damit zur Bestimmung des Ein- und Abschaltzeitpunktes des die Ladedauer des Kondensators erfassenden Zählers.

Die Erfindung ist anhand zweier in der Zeichnung dargestellter Ausführungsbeispiele erläutert. Es zeigt:
- Fig. 1: eine Schaltung eines ersten Ausführungsbeispieles mit einem Mikrocomputer zur Drehzahlsteuerung eines Motors durch Phasenanschnittsteuerung eines Triac,
- Fig. 2: den Verlauf der Steuer- und Pegelströme an verschiedenen Punkten der Schaltung,
- Fig. 3: bis 5 Flußdiagramme mit Einzelheiten der Verfahrensschritte der in den Programmspeichern des Mikrocomputers gespeicherten Programme,
- Fig. 6: eine Schaltung eines zweiten Ausführungsbeispieles zur Drehzahlsteuerng des Motors,
- Fig. 7: den Verlauf der Steuer- und Pegelströme an verschiedenen Punkten der zweiten Schaltung und
- Fig. 8: ein Flußdiagramm mit Einzelheiten der Verfahrensschritte der in den Programmspeichern des Mikrocomputers der zweiten Schaltung gespeicherten Programme.

An einem Wechselstromanschluß liegt ein Motor (1) in Reihe mit einem Triac (2). Dieser wird über einen Trafo (3a) einer Zündschaltung (3) gesteuert, die über eine Leitung mit einem Ausgang OUT 0 eines drei Zähler (Z0, Z1, und Z2) enthaltenden Zählerbausteines (7) verbunden ist, der über einen Datenbus (DB) an einem Mikrocomputer (4) angeschlossen ist.

Als Zählerbaustein (7) wird der Baustein 8253-5 verwendet, der neben internen Funktionsgruppen, wie Datenbuspuffer, Schreib-/Lese-Logik, Kontrollwort-Register, drei 16-Bit-Abwärtszähler aufweist. Der Datenbuspuffer ist ein 3-State-bidirektionaler 8-Bit-Puffer und dient als Interface zum Systemdatenbus. Er soll im wesentlichen die Funktionen - Einprogrammieren der verschiedenen Bedienungsarten, Laden der Zählerregister und Lesen der Zählerinhalte - durchführen. Die Schreib-/Lese-Logik akzeptiert Daten auf einem Datenbus (DB) des Mikrocomputers (4) und erzeugt Kontrollsignale zur Steuerung der einzelnen Bausteinfunktionen. Sie wird durch die Leitung C̅E̅ von einem Adressbus (AB) des Mikrocomputers (4) aktiviert, der außerdem Leitungen A0 und A1 zur Auswahl der drei Zähler (Z0, Z1, Z2) des Zählerbausteines und des Kontrollwortregisters aufweist. Die Logik ist außerdem noch über Eingangsleitungen R̅D̅ zum Lesen der Zählerinhalte und WR zum Laden der Zähler bzw. zum Einschreiben eines Kontrollwortes für den Zählerzustand mit dem Mikrocomputer (4) verbunden. Das Kontrollwortregister enthält die Information für den Operationszustand jedes Zählers (Z0, Z1, Z2) der Selektion der Zählart (binär oder BCD) sowie für das Laden eines jeden Zählerregisters.

Die drei 16-Bit-Zähler (Z0, Z1, Z2) sind identische Abwärtszähler, die entweder binär oder BCD arbeiten können. Der Computer (4) kann die Zähler (Z0, Z1, Z2) vorladen und lesen. Der Zählvorgang wird durch den jeweiligen GATE-Eingang gesteuert. Da alle drei Zähler (Z0, Z1, Z2) im gleichen Zählerzustand (MODE 0) arbeiten, soll hier nur dieser beschrieben werden. Dabei bleibt der Zählerausgang (OUT) auf L-Potential, während der Zählermodus eingeschrieben wird, beim Vorladen des jeweiligen Zählers (Z0, Z1, Z2) und während des Zählvorganges. Wenn der jeweilige Zähler (Z0, Z1, Z2) NULL erreicht hat, geht der Ausgang auf H-Potential und bleibt so lange in diesem Zustand, bis ein neues Kontrollwort eingeschrieben wird. Die Zähler (Z0, Z1, Z2) zählen nur so lange, wie an ihren GATE-Eingängen H-Potential anliegt. Von den drei Zählern dient Zähler (Z0) zur Erzeugung des Zündimpulses, Zähler (Z1) zur Messung des Anlasserwiderstandes und Zähler (Z2) zur Messung der Periodendauer der Impulse eines mit dem Motor (1) verbundenen Impulsgebers (6). Alle drei Zähler (Z0, Z1, Z2) arbeiten mit der vom internen Oszillator des Computers (4) erzeugten Taktfrequenz ALE. Der Ausgang (OUT 0) des Zählerbausteines (7) ist mit dem Ausgang des Zählers (Z0) verbunden.

Mit der Antriebswelle (1a) des Motors (1) ist eine Impulsscheibe (5) fest verbunden, die mit dem Impulsgeber (6) zusammenwirkt. Die Impulsscheibe (5) weist eine Vielzahl von Strichmarkierungen auf, aus denen der Impulsgeber (6) der Drehzahl entsprechende Impulssignale erzeugt. Diese werden über eine Leitung einem Eingang TAKT des Mikrocomputers (4) zugeleitet.

An den Wechselstromanschluß ist ein Gleichrichter (9) angeschlossen, dessen negativer Anschluß (9b) mit Masse und dessen positiver Anschluß (9a) über einen Widerstand (10) und eine Zenerdiode (11) mit Masse verbunden ist. An eine Verbindung (12) zwischen dem Widerstand (10) und der Zenerdiode (11) ist ein mit Masse verbundener Kondensator (13) angeschlossen, über dem eine stabilisierte Gleichspannung entnommen werden kann.

An die Verbindung (12) ist ein Spannungsteiler (14) angeschlossen, der aus Widerständen (15 und 16) besteht, wobei der Widerstand (16) mit Masse verbunden ist. Der Verbindungspunkt zwischen den beiden Widerständen (15) und (16) ist an dem invertierenden Eingang eines Komparators (17) angeschlossen, während am nicht invertierenden Eingang des Komparators (17) der Verbindungspunkt von zwei Widerständen (18 und 19) liegt, die einen Spannungsteiler (20) bilden und zwischen dem Anschlußpunkt (9a) und Masse geschaltet sind. Der Ausgang des Komparators (17) ist über einen Widerstand (21) mit der Basis eines PNP-Schalttransistors (22) verbunden, dessen Emitter an der Verbindung (12) und dessen Kollektor an einer Verbindung (23) angeschlossen ist. Diese liegt zwischen zwei Widerständen (24 und 25) und einem Widerstand (26) sowie einem Kondensator (27). Die Widerstände (24 bis 26) und der Kondensator (27) bilden dabei ein RC-Glied (28), das zwischen dem Verbindungspunkt (12) und Masse angeordnet ist. Der Widerstand (25) ist als Potentiometer ausgebildet und zweckmäßigerweise zur manuellen Betätigung vorgesehen.

Der Verbindungspunkt zwischen den Widerständen (15 und 16) des Spannungsteilers (14) ist auch mit dem invertierenden Eingang eines weiteren Komparators (29) verbunden, dessen nicht invertierender Eingang an einem Verbindungspunkt (30) zwischen dem Widerstand (26) und dem Kondensator (27) angeschlossen ist. Der Ausgang des Komparators (29) ist über einen Widerstand (31) an die stabilisierte Spannung des Verbindungspunktes (12) geschaltet. Außerdem ist der Ausgang des Komparators (29) über eine Diode (32) mit dem GATE des dritten Zahlers (Z0) des Zählerbausteines (7) sowie direkt mit dem GATE des zweiten Zählers (Z1) verbunden. An das GATE des ersten Zählers (Z2) ist die Verbindung (12) angeschlossen.

Der Ausgang des Komparators (17) ist mit dem GATE des Zählers (Z0) und mit dem Eingang NULLD des Mikrocomputers (4) verbunden.

Die Schaltung arbeitet wie folgt:
Die Netzspannung wird durch die Gleichrichterbrücke (9) gleichgerichtet, so daß an Punkt (9a) das positive Potential einer pulsierenden Gleichspannung abnehmbar ist. An dem Punkt (12) ist eine durch die Zenerdiode (11) und den Kondensator (13) weitgehend stabilisierte Gleichspannung abnehmbar.

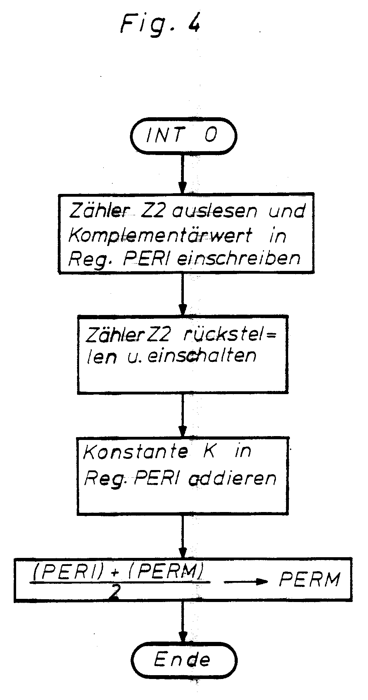

Beim Umlauf des Motors (1) dreht sich die mit der Motorwelle (1a) verbundene Impulsscheibe (5) und erzeugt im Impulsgeber (6) Impulse, deren abfallende Flanken am Eingang TAKT des Mikrocomputers (4) jeweils ein Programm INT 0 (Fig. 4) auslösen. In diesem wird zuerst der Zähler (Z2) ausgelesen und anschließend gelöscht. Zum Ausgleich seiner während der Laufzeit des Programmes INT 0 nicht eingeschalteten Zeit wird eine Konstante "K" zum komplementierten Wert des Zählers (Z2) addiert und das Ergebnis nach einem Register PERI gebracht. Im folgenden wird noch eine Mittelwertbildung zwischen dem momentanen Wert im Register PERI und dem vorhergehenden in einem Register PERM enthaltenen Mittelwert durchgeführt, um starke Drehzahlschwankungen auszugleichen.

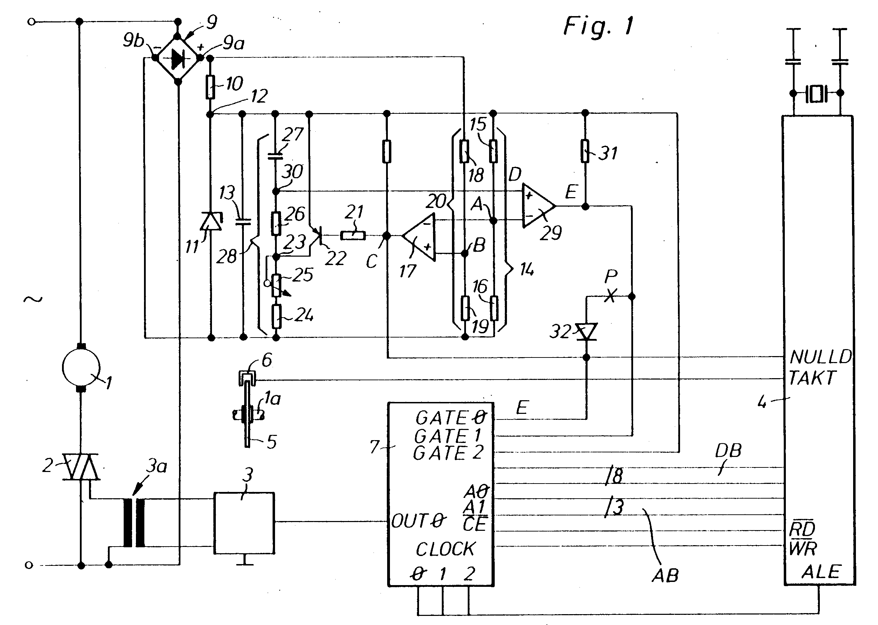

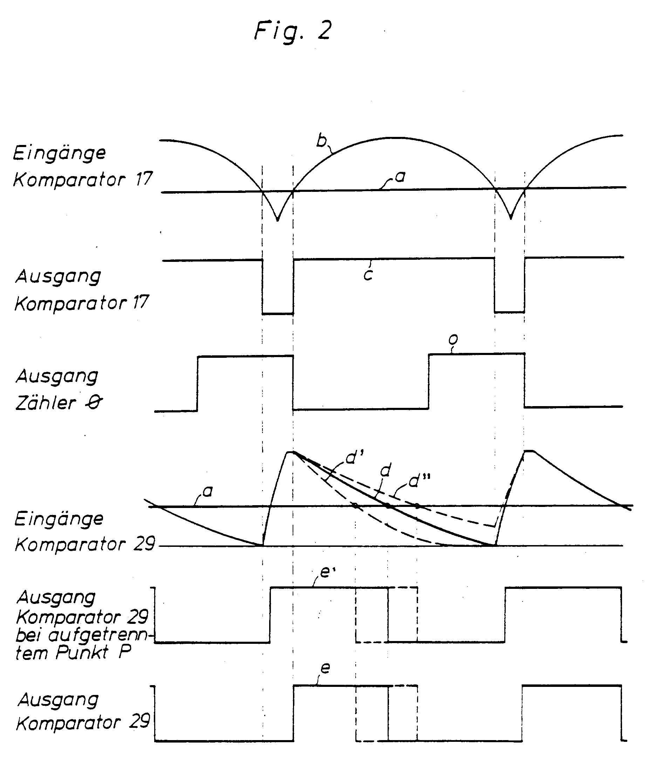

Am invertierenden Eingang des Komparators (17) (Fig. 1 und 2) steht im Punkt (A) eine durch den Spannungsteiler (14) vorgegebene Spannung (a) an, während an dem nicht invertierenden Eingang (B) eine durch den Spannungsteiler (20) entstehend verkleinerte gleichgerichtete Wechselspannung (b) anliegt. In der Fig. 2 ist der Verlauf der entsprechenden Spannung dargestellt. Am Ausgang (C) des Komparators (17) treten damit Rechteckimpulse (c) auf, deren abfallende Flanken über die Leitung NULLD im Computer (4) alle 10 msec ein Programm INT 1 auslösen. Außerdem werden die Rechteckimpulse (c) auf den GATE-Eingang des Zählers (Z0) geführt.

Die abfallende Flanke der Rechteckimpulse (c) am Ausgang (C) des Komparators (17) schaltet den Transistor (22) auf Durchlaß. Damit wird der Kondensator (27) über den kleinen Widerstand (26) entladen, d. h. die Spannung (d) am Verbindungspunkt (30) steigt schnell nach einer e-Funktion auf 5 Volt an. Sobald die Spannung am nicht invertierenden Eingang (D) des Komparators (29) die Spannung (a) am invertierenden Eingang (A) wieder überschreitet, schaltet der Komparator (29) um und sein Ausgang (E) würde H-Potential annehmen; er wird aber durch die Diode (32) auf L-Potential gehalten. Fig. 2 zeigt diesen Tatbestand. Mit e' ist die Ausgangsspannung des Komparators 29 bezeichnet, wie sie bei einer im Punkt P aufgetrennten Leitung verlaufen würde. Durch die angeschlossene Diode (32) wird der Ausgang des Komparators (29) und damit auch das GATE des Zählers (Z1) auf L-Potential gehalten, so daß der Zähler (Z1) noch nicht zählt.

Sobald die Spannung (b) am nicht invertierenden Eingang (B) des Komparators (17) die Spannung (a) am invertierenden Eingang (A) wieder überschreitet, schaltet der Ausgang (C) des Komparators (17) auf H-Potential. Jetzt kann auch der Ausgang (E) des Komparators (29) H-Potential annehmen, da er jetzt nicht mehr durch die Diode (32) auf L-Potential gehalten wird. Damit wird der Zähler (Z1) freigegeben und er beginnt mit seinem Zählvorgang. Durch die ansteigende Flanke des Rechteckimpulses (c) wird gleichzeitig der Schalttransistor (22) gesperrt. Von diesem Zeitpunkt an wird der Kondensator (27) über die Widerstände (24, 25 und 26) wieder aufgeladen. Entsprechend der Einstellung des Widerstandes (25) erfolgt die Aufladung mit unterschiedlichem Anstiegsverlauf, wobei sich die Spannung (d) am Verbindungspunkt (30) entsprechend erniedrigt. In Fig. 2 ist der Verlauf der Spannung (d) bei einem Einstellwert des Widerstandes (25) dargestellt. Der Spannungsabfall (d' bzw. d'') bei zwei anderen Einstellwerten des Widerstandes (25) ist strichpunktiert angedeutet.

Sobald die Spannung am nicht invertierenden Eingang (D) des Komparators (29) die durch den Spannungsteiler (14) vorgegebene Referenzspannung am invertierenden Eingang (A) unterschreitet, schaltet der Ausgang (E) des Komparators (29) auf L-Potential und der Zählvorgang des Zählers (Z1) wird gesperrt.

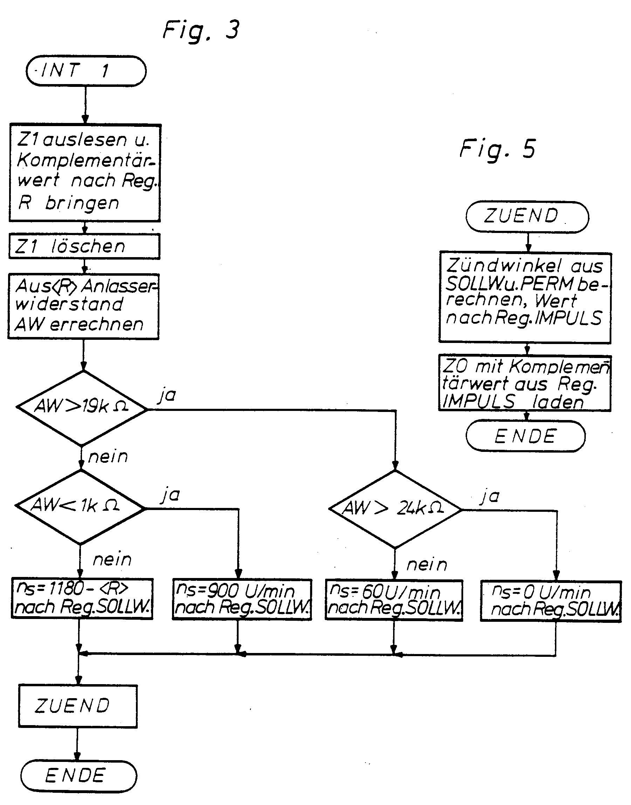

Im Unterprogramm INT 1 (Fig.3) wird der Zähler (Z1) vom Microcomputer (4) ausgelesen, der Wert in ein Register (R) gebracht und dann wird der Zähler (Z1) gelöscht. Anschließend wird er zurückgestellt und auf "gated" geschaltet, d. h. er beginnt erst wieder zu zählen, wenn der Ausgang des Komparators (29) wieder H-Potential erhält, zu dem Zeitpunkt also, wenn die Aufladung des Kondensators (27) wieder beginnt. Sobald diese Aufladung den durch die Referenzspannung am Komparator (29) bestimmten Wert überschreitet, und dessen Ausgang wieder L-Potential annimmt, stoppt der Zähler (Z1) und wird beim nächsten Unterprogramm INT 1 dabei ausgelesen. Aus dem Zählerstand, der der abgelaufenen Zeit entspricht, wird der gerade eingestellte Wert des Widerstandes (25) errechnet. Dieser ist proportional zur abgelaufenen Zeit und damit auch zum Zählerstand.

Es wird nun geprüft, ob der Widerstand (25) größer als 24 kΩ, größer als 19 kΩ oder kleiner als 1 kΩ ist. In diesen Fällen wird ein Solldrehzahlwert von 0 U/min, von 60 U/min bzw. von 900 U/min zugrundegelegt. Wenn der Widerstand (25) zwischen 1 kΩ und 19 kΩ beträgt, wird daraus die Solldrehzahl und die Zeit bis zum Zündimpuls errechnet. Entsprechend des jeweils gültigen Drehzahlwertes wird ein Register SOLLW mit dem Kehrwert dieser Zahl geladen.

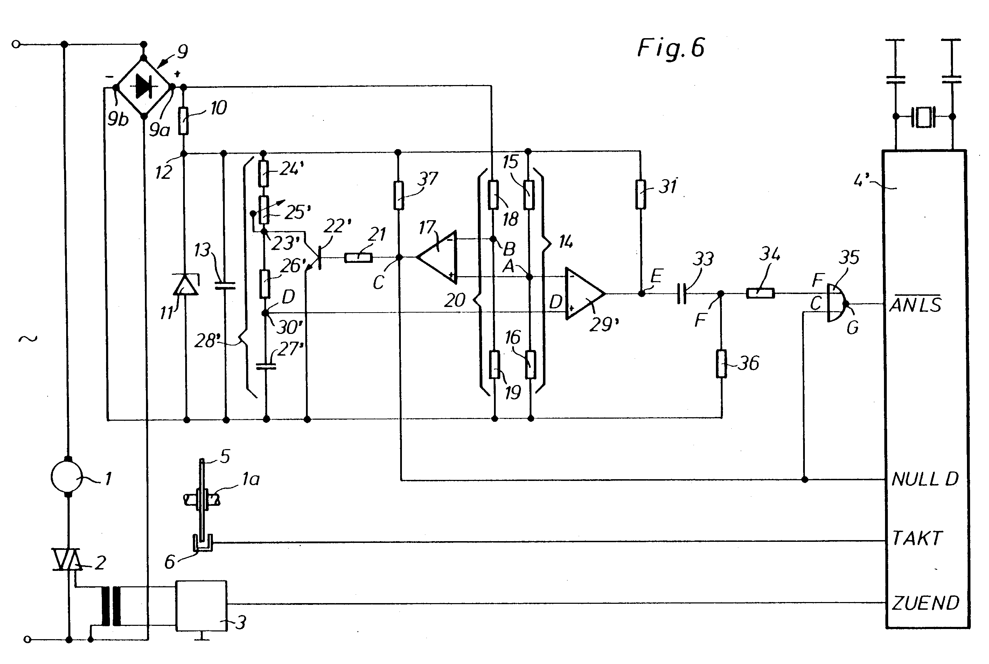

In einem Unterprogramm ZUEND (Fig.5) wird aus den Werten in den Registern SOLLW und PERM der Zündwinkel für die Steuerung des Triac's (2) errechnet und der Wert nach Register IMPULS gebracht. Mit dem Koplement des Wertes aus dem Register IMPULS wird der Zähler (Z0) voreingestellt. Dieser beginnt erst abwärts zu zählen, wenn am Ausgang des Koparators (17) und damit an seinem Startzeitpunkt des Zählers (Z0) unabhängig von unterschiedlichen Programmlaufzeiten.

Sobald der Zähler (Z0) Null erreicht hat, wird am Ausgang OUT 0 des Zählerbausteines (7) (Fig.1) ein Impuls an die Zündschaltung (3) abgegeben, die den Triac (2) über den Transformator (3a) durchschaltet, wodurch sich die Drehzahl des Motors (1) auf einen dem am Widerstand (25) eingestellten Wert entsprechenden Wert einstellt.

In den Fig. 6 bis 8 ist ein zweites Ausführungsbeispiel der Erfindung dargestellt. Dabei werden zwei interne Zähler (Z0 und Z1) eines Mikrocomputers (4') verwendet. Die Schaltung dieses Ausführungsbeispieles weicht daher vom bisher beschriebenen in einigen Details ab. Übereinstimmende Bauteile sind mit gleichen Bezugszahlen versehen. Für sie wurde auf eine gesonderte Beschreibung verzichtet. Ähnliche, aber in abweichender Weise geschaltete Bauteile wurden durch ein Strichzeichen ergänzt.

Bei dem zweiten Ausführungsbeispiel (Fig. 6) ist die Zündschaltung (3) mit einem Ausgang ZUEND des Mikrocomputers (4') verbunden.

Der Ausgang des Komparators (17) ist über den Widerstand (21) mit der Basis eines NPN-Schalttransistors (22') verbunden, dessen Ermitter an Masse und dessen Kollektor an einer Verbindung (23') angeschlossen ist. Diese liegt zwischen zwei Widerständen (24' und 25') und einen Widerstand (26') sowie einem Kondensator (27'). Die Widerstände (24' bis 26') und der Kondensator (27') liegen dabei zwischen dem Verbindungspunkt (12) und Masse. Die Widerstände (24' bis 26') und der Kondensator (27') bilden dabei ein RC-Glied (28'). Der Widerstand (25') ist als Potentiometer ausgebildet und zweckmäßigerweise zur manuellen Bestätigung vorgesehen.

Der Verbindungspunkt zwischen den Widerständen (15 und 16) des Spannungsverteilers (14) ist auch mit dem invertierenden Eingang eines weiteren Komparators (29') verbunden, dessen nicht invertierender Eingang an einem Verbindungspunkt (30') zwischen dem Widerstand (26') und dem Kondensator (27') angeschlossen ist. Der Ausgang des Komparators (29') ist über den Widerstand (31) an die stabilisierende Spannung des Verbindungspunktes (12) geschaltet. Außerdem ist der Ausgang des Komparators (29') über einen Kondensator (33) und einen Widerstand (34) an einem Eingang eines NOR-Gliedes (35) angeschlossen. Die Verbindung zwischen dem Kondensator (33) und dem Widerstand (34) liegt über einen Widerstand (36) an Masse.

Der Ausgang des Komparators (17) ist über einen Widerstand (37) mit dem Verbindungspunkt (12) und direkt mit einem Eingang NULLD des Mikrocomputers (4') sowie mit dem zweiten Eingang des NOR-Gliedes (35) verbunden. Dessen Ausgang ist an einem Eingang ANLS des Mikrocomputers (4') angeschlossen.

Die Schaltung arbeitet wie folgt:
Beim Umlauf des Motors (1) dreht sich die mit der Motorwelle (1a) verbundene Impulsscheibe (5) und erzeugt im Impulsgeber (6) Impulse, deren abfallende Flanken am Eingang TAKT des Mikrocomputers (4') jeweils das Programm INT 0 auslösen, dessen Flußdiagramm in Fig. 4 abgebildet ist. Gegenüber dem ersten Ausführungsbeispiel wird hier der interne Zähler (Z2) ausgelesen und sein Wert als Drehzahlistwert verwendet.

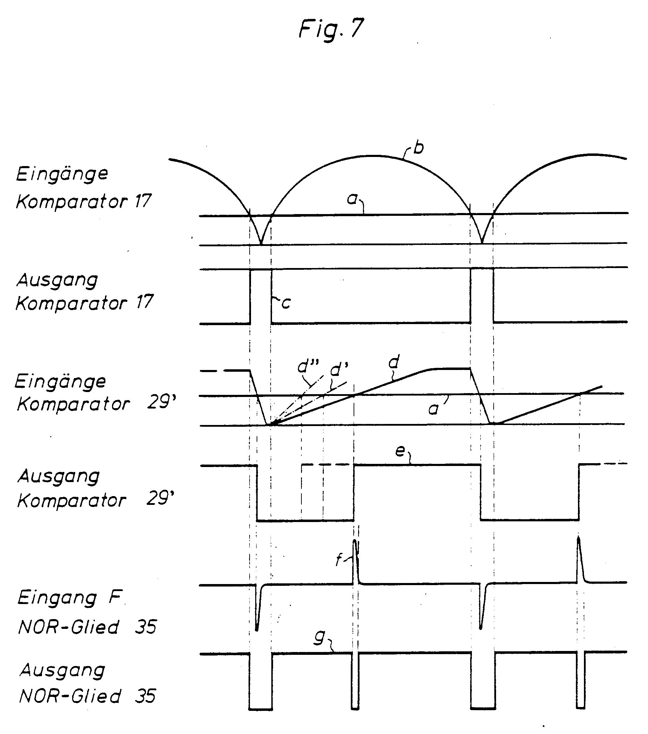

Am nicht invertierenden Eingang des Komparators (17) steht im Punkt (A) eine durch den Spannungsverteiler (14) vorgegebene Spannung (a) an, während an dem invertierenden Eingang (B) eine durch den Spannungsteiler (20) entsprechend verkleinerte gleichgerichtete Netzspannung (b) anliegt. In der Fig. 7 ist der Verlauf der entsprechenden Spannung dargestellt. Am Ausgang (C) des Komparators (17) treten damit Rechteckimpulse (c) auf, die über die Leitung NULLD im Computer (4') alle 10 msec anliegen.

Die ansteigende Flanke der Rechteckimpulse am Ausgang (C) des Komparators (17) schaltet den Transistor (22') auf Durchlaß. Damit wird der Kondensator (27') über den Widerstand (26') entladen. Sobald die Spannung am invertierenden Eingang (B) vom Komparator (17) die Spannung am nicht invertierenden Eingang (A) wieder überschreitet, schaltet der Ausgang (C) des Komparators (17) auf L-Potential. Durch die abfallende Flanke des Rechteckimpulses (c) wird der Schalttransistor (22') gesperrt. Von diesem Zeitpunkt an wird der Kondensator (27') über die Widerstände (24', 25' und 26') wieder aufgeladen. Entsprechend der Einstellung des Widerstandes (25') erfolgt die Aufladung mit unterschiedlichem Anstiegsverlauf. In Fig. 7 ist der Verlauf der Spannung (d) bei einem Einstellwert des Widerstandes (25') dargestellt. Der Spannungsanstieg (d' bzw. d'') bei zwei anderen Einstellwerten des Widerstandes (25') ist strichpunktiert angedeutet.

Sobald die Spannung am nicht invertierenden Eingang (D) des Komparators (29') die durch den Spannungsteiler (14) vorgegebene Referenzspannung am invertierenden Eingang (A) überschreitet, schaltet der Ausgang (E) des Komparators (29') auf H-Potential und löst damit über das Differenzierglied (Kondensator 33 und Widerstand 36) einen kurzen Steuerimpuls (f) aus. Dieser Steuerimpuls (f) wird auf den einen Eingang des an seinem anderen Eingang in dieser Zeit auf L-Potential gehaltenen NOR-Gliedes (35) geleitet und bewirkt an dessen Ausgang eine kurzzeitige Umschaltung auf H-Potential, wodurch der Ausgang des NOR-Gliedes (35) im Mikrocomputer (4') ein Unterbrechungsprogramm INT 1 auslöst.

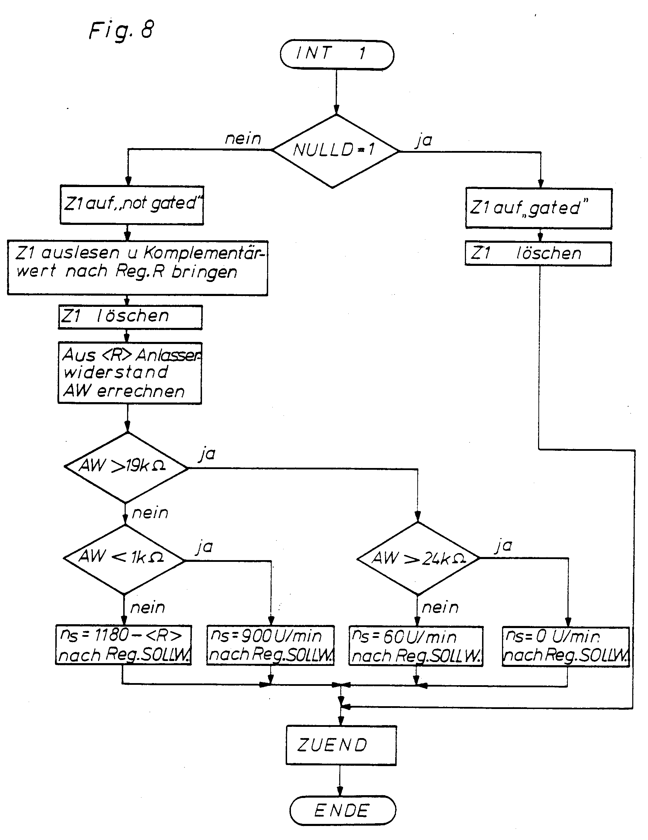

Im Unterbrechungsprogramm INT 1 (Fig.8) prüft der Mikrocomputer (4'), ob sein Eingang NULLD H-Potential aufweist. Wenn dies zutrifft, dann wurde die Unterbrechung durch den Nulldurchgang der Netzspannung ausgelöst, so daß folgende Programmschaltung abläuft:

Ein im Mikrocomputer (4') vorhandener Zähler (Z1) wird zurückgestellt und auf "gated" geschaltet, d. h. der Zähler (Z1) beginnt erst zu zählen, wenn die Leitung A̅N̅L̅S̅ wieder H-Potential erhält, zu dem Zeitpunkt also, wenn am Ausgang des Komparators (17) L-Potential auftritt und damit die Aufladung des Kondensators (27') wieder beginnt. Die Zeit bis zum Zündimpuls wird im Unterprogramm ZUEND (Fig. 5) wie beim ersten Ausführungsbeispiel vom Mikrocomputer (4') errechnet und der Wert in die dafür vorgesehene Speicherzelle IMPULS abgespeichert. Der Zähler (Z0) wird mit dem Kehrwert dieses Zeitwertes geladen. Damit ist die Netznulldurchgangs-Unterbrechung beendet.

Wurde die Unterbrechung durch die Anlassermeldung ausgelöst, bei der am Eingang NULLD des Mikrocomputers (4) L-Potential anliegt, wird der Zähler (Z1) angehalten, ausgelesen und gelöscht. Aus dem Zählerstand, der der abgelaufenen Zeit zur Aufladung des Kondensators (27') entspricht, wird der gerade eingestellte Wert Widerstandes (25) errechnet. Dieser ist proportional zur abgelaufenen Zeit und damit auch zum Zählerstand.

Der weitere Programmablauf zur Berechnung des Drehzahlsollwertes und zur Zündung des Triac (2) entspricht den Maßnahmen, wie sie bereits beim ersten Ausführungsbeispiel beschrieben wurden.

In dem Unterprogramm ZUEND wird aus den Werten in den Registern SOLLW und PERM der Zündwinkel für die Steuerung des Triac (2) errechnet und damit ein interner Zähler (Z0) voreingestellt. Dieser beginnt aufwärts zu zählen, sobald am Eingang NULLD des Mikrocomputers (4') H-Potential ansteht. Damit ist der Startzeitpunkt des Zählers (Z0) unabhängig von unterschiedlichen Programmlaufzeiten.

Sobald der Zähler (Z0) Null erreicht hat, wird am Ausgang ZUEND des Mikrocomputers (4') ein Impuls an die Zündschaltung (3) abgegeben, die den Triac (2) durchschaltet.

## Patentansprüche

1. Schaltungsanordnung zum Regeln der Drehzahl eines an Wechselstrom angeschlossenen Elektromotors (1), mit einem mit dem Motor gekoppelten Drehzahlgeber (6) zum Erzeugen von Impulsen, deren zeitlicher Abstand ein Maß für die Drehzahl des Motors ist, einem Oszillator zum Erzeugen von Taktsignalen, die einem ersten Zähler (Z2) zuführbar sind, der die Anzahl der Taktsignale zwischen zeitlich hintereinander liegenden Impulsen des Drehzahlgebers (6) zählt, einem Register (PERI), welches den Zählerstand des ersten Zählers (Z2) übernimmt, einer Einrichtung zum Erzeugen eines Steuerwertes zur Vorgabe der Drehzahl des Elektromotors (1) und einem Mikrocomputer (4 bzw. 4'), der aus dem Steuerwert und dem Inhalt des Registers (PERI) einen Zündwinkel für eine dem Motor vorgeschaltete Zündschaltung (3) berechnet, gekennzeichnet durch folgende Merkmale der Einrichtung zum Erzeugen des Steuerwertes:
a) eine an die Wechselspannung angeschlossene Gleichrichteranordnung (9, 10, 11), die einen Ausgang (12) mit stabilisierter Spannung und einen Ausgang (9a) mit im Halbwellen-Rhythmus pulsierender Gleichspannung aufweist,
b) ein an sich bekanntes RC-Glied (28, 28') mit einem manuell veränderbaren Widerstand (25 bzw. 25') und einem Kondensator (27 bzw. 27'),
c) ein erster Komparator (17), der sowohl an die stabilisierte als auch an die pulsierende Gleichspannung der Gleichrichteranordnung (9, 10, 11) angeschlossen ist und beim Überschreiten der pulsierenden Gleichspannung über die stabilisierte Spannung anspricht, um den Ladevorgang des Kondensators (27) in dem RC-Glied (28) über einen Schalter (22) und einem zweiten Zähler (Z1) zur Ermittlung des durch den veränderbaren Widerstand (25) vorgegebenen Drehzahlwertes einzuschalten und beim Unterschreiten der pulsierenden Gleichspannung unter die stabilisierte Spannung den Entladevorgang des Kondensators (27) über den Schalter (22) einzuschalten,
d) ein zweiter Komparator (29), der an dem Kondensator (27) des RC-Gliedes (28) und an der stabilisierten Spannung des Gleichrichters (9, 10, 11) angeschlossen ist, um beim Überschreiten der Ladespannung des Kondensators (27) über die stabilisierte Spannung den zweiten Zähler (Z1) abzuschalten,
e) der Mikrocomputer (4 bzw. 4') lädt nach Berechnung des Zündwinkels des Triac (2) aus den Werten des ersten und des zweiten Zählers (Z2, Z1) einen dritten Zähler (Z0), der vom ersten Komparator (17) einschaltbar ist und an seinem Zählende die Abgabe eines Zündsignals durch den Mikrocomputer (4 bzw. 4') an die Zündschaltung (3) bewirkt.

2. Schaltungsanordnung nach Anspruch 1, dadurch gekennzeichnet, daß der Ausgang des Komparators (29) zur Verzögerung seiner Umschaltung über eine Diode (32) sowohl mit dem Ausgang des Komparators (17) als auch mit dem Schalteingang des dritten Zählers (Z0) zur Auslösung des Zündvorganges des Triac (2) verbunden ist.

3. Schaltungsanordnung nach Anspruch 1, dadurch gekennzeichnet, daß das Schaltelement (29') über ein Differenzierglied (Kondensator 33 und Widerstand 36) mit dem einen Eingang eines NOR-Gliedes (35) verbunden ist, dessen anderer Eingang an dem Ausgang des Komparators (17) und dessen Ausgang an dem Schalteingang des zweiten Zählers (Z1) angeschlossen ist.

## Claims

1. Circuit arrangement for regulating the speed of an electric motor (1) connected to alternating current, including a speed generator (6) coupled to the motor for generating pulses, the time interval between such pulses being a parameter for the speed of the motor, an oscillator for generating timing signals, which are suppliable to a first counter (Z2), which counts the number of timing signals between pulses from the speed generator (6) which lie one behind the other in respect of time, a recorder (PERI), which assumes the counting position of the first counter (Z2), a means for generating a control value for prescribing the speed of the electric motor (1), and a microcomputer (4 or 4') which calculates, from the control value and the contents of the recorder (PERI), an ignition angle for an ignition circuit (3) connected to the input side of the motor, characterised by the following features of the means for generating the control value:
a) a rectifier arrangement (9, 10, 11), which is connected to the alternating voltage and has an output (12) with stabilised voltage and an output (9a) with a direct voltage which pulsates with a half-wave rhythm;
b) an RC member (28, 28'), which is known per se and has a manually variable resistor (25 or 25') and a capacitor (27 or 27');
c) a first comparator (17), which is connected to both the stabilised and the pulsating direct voltage of the rectifier arrangement (9, 10, 11) and which responds when the pulsating direct voltage exceeds the stabilised voltage, in order to start the charging process of the capacitor (27) in the RC member (28) via a switch (22) and a second counter (Z1) for determining the speed value prescribed by the variable resistor (25), and in order to start the discharging process of the capacitor (27) via the switch (22), when the pulsating direct voltage falls below the stabilised voltage;
d) a second comparator (29), which is connected to the capacitor (27) of the RC member (28) and to the stabilised voltage of the rectifier (9, 10, 11), in order to switch-off the second counter (Z1) when the charging voltage of the capacitor (27) exceeds the stabilised voltage;
e) after calculating the ignition angle of the triac (2) from the values of the first and second counters (Z2, Z1), the microcomputer (4 or 4') charges a third counter (Z0), which can be activated by the first comparator (17) and, at its counting end, effects the transfer of an ignition signal through the microcomputer (4 or 4') to the ignition circuit (3);

2. Circuit arrangement according to claim 1, characterised in that the output of the comparator (29), in order to delay its switchover, is connected via a diode (32) both to the output of the comparator (17) and to the switching input of the third counter (Z0) in order to start the ignition process of the triac (2).

3. Circuit arrangement according to claim 1, characterised in that the switching element (29') is connected, via a differentiating member (capacitor 33 and resistor 36), to one input of a NOR member (35), the other input of which is connected to the output of the comparator (17), and the output of which is connected to the switching input of the second counter (Z1).

## Revendications

1. Agencement de circuit de régulation de la vitesse de rotation d'un moteur électrique (1) raccordé à un courant alternatif, avec un capteur de vitesse de rotation (6), couplé au moteur, pour produire des impulsions, dont l'espacement temporel est une indication quantitative de la vitesse de rotation du moteur, un oscillateur pour produire des signaux de cadencement, pouvant être amenés dans un premier compteur (Z2) comptant le nombre de signaux de cadencement entre des impulsions, se succédant temporellement, du capteur de vitesse de rotation (6), un registre (PERI), prenant en charge l'état de comptage du premier compteur (Z2), un dispositif pour produire une valeur de commande destinée à allouer la vitesse de rotation du moteur électrique (1) et un microordinateur (4, respectivement 4'), qui calcule à partir de la valeur de commande et du contenu du registre (PERI) un angle d'allumage pour un circuit d'allumage (3) branché en amont du moteur, caractérisé par les caractéristiques suivantes du dispositif de production de la valeur de commande :
a) un dispositif redresseur (9, 10, 11), raccordé à la tension alternative, présentant une sortie (12) avec une tension stabilisée et une sortie (9a) avec une tension continue pulsée au rythme des demi-ondes,
b) un organe RC (28, 28') connu en soi, avec une résistance (25, respectivement 25') pouvant être modifiée manuellement, et un condensateur (27, respectivement 27'),
c) un premier comparateur (17), raccordé tant à la tension continue stabilisée qu'également à la tension continue pulsée du dispositif redresseur (9, 10, 11) et réagissant, en cas de dépassement de la tension pulsée au-delà de la tension stabilisée, afin de mettre en service le processus de chargement du condensateur (27) situé dans l'organe RC (28), par l'intermédiaire d'un interrupteur (22) et d'un deuxième compteur (Z1), pour la détermination de la valeur de la vitesse de rotation prédéterminée par la résistance réglable (25) et pour mettre en service le processus de décharge du condensateur (27) par l'intermédiaire de l'interrupteur (22) en cas de descente de la tension continue pulsée au-dessous de la tension stabilisée,
d) un deuxième comparateur (29), raccordé au condensateur (27) de l'organe RC (28) et à la tension stabilisée du redresseur (9, 10, 11), afin de mettre hors service le deuxième compteur (Z1) en cas de dépassement de la tension de charge du condensateur (27) au-delà de la tension stabilisée,
e) le microordinateur (4, respectivement 4') chargeant, après calcul de l'angle d'allumage du triac (2), à partir des valeurs des premier et deuxième compteurs (Z2, Z1) un troisième compteur (Z0) pouvant être mis en service par le premier comparateur (17), et provoquant à la fin de son comptage, l'envoi d'un signal d'allumage, au moyen du microordinateur (4, respectivement 4'), au circuit d'allumage (3).

2. Agencement de circuit selon la revendication 1, caractérisé en ce que la sortie du comparateur (29) est reliée, pour provoquer le retardement de sa commutation par l'intermédiaire d'une diode (32), tant à la sortie du comparateur (17) qu'également à l'entrée de commutation du troisième compteur (Z0), pour déclencher le processus d'allumage du triac (2).

3. Agencement de circuit selon la revendication 1, caractérisé en ce que l'élément de commutation (29') est relié par un organe différentiateur (condensateur 33 et résistance 36) à une première entrée d'un organe, logique NOR (35), dont l'autre entrée est raccordée à la sortie du comparateur (17) et dont la sortie est raccordée à l'entrée de commutation du deuxième compteur (Z1).
